# FASCICULE DE BREVET EUROPEEN

(11) **EP 0 785 332 B1**
(45) Date de publication et mention de la délivrance du brevet: **27.12.2000**
(21) Numéro de dépôt: 97400058.0
(22) Date de dépôt: 14.01.1997
(51) Int. Cl.: E05F 1/12, F16F 15/28, E05D 11/10

(54) **Disposif de positionnement angulaire d'une masse par rapport à un axe horizontal de support et appareil d'éclairage équipé d'un tel dispositif**
Winkelpositionierungsgerät für ein Gewicht und eine Lichteinheit die ein solches Gerät befasst
Angular positioning means for a mass relative to a horizontal axis and lighting device incorporating such a positioning means

(30) Priorité: 19.01.1996 FR 9600623
(43) Date de publication de la demande: 23.07.1997
(73) Titulaire: ALM, 45160 Ardon (FR)
(72) Inventeur: Rouchon, Jean-Jacques, 94700 Maisons Alfort (FR); Verdier, Alain, 42170 Saint Just Saint Rambert (FR)
(74) Mandataire: Le Moenner, Gabriel

(56) Documents cités:
- EP-A- 0 235 824
- GB-A- 920 550
- US-A- 4 137 669
- US-A- 5 038 520

## Description

La présente invention se rapporte à un dispositif de positionnement angulaire d'une masse par rapport à un axe horizontal de support, et en particulier à un dispositif de positionnement d'une coupole d'éclairage d'un appareil d'éclairage pour salle d'opération.

Elle se rapporte également à un appareil d'éclairage équipé d'un tel dispositif.

On connaît des dispositifs de positionnement angulaire d'une masse par rapport à un axe horizontal de support, du type comprenant un bras de soutien destiné à porter ladite masse et monté angulairement déplaçable autour dudit axe de support, et un organe d'équilibrage dudit bras relié à celui-ci et coopérant avec un organe élastique de rappel adapté pour appliquer sur un point solidaire du bras de soutien une force, de façon à générer un moment d'équilibrage de la masse autour de l'axe de support (O₁) s'opposant au moment engendré par le poids de celle-ci, l'ensemble constitué par l'organe d'équilibrage et l'organe élastique de rappel étant monté oscillant sur un axe d'oscillation parallèle à l'axe de support et situé à une distance fixe de celui-ci, de façon à s'orienter en permanence vers ledit point (M) lors des déplacements angulaires du bras de soutien.

Un dispositif de ce type est décrit dans le document GB-A-920550, où l'axe de support et le point d'application de la force sont montés stationnaires à la base d'un bras de suspension du dispositif.

On connaît également des dispositifs de positionnement angulaire, des appareils d'éclairage où l'organe d'équilibrage est constitué par une chaîne reliée par une de ses extrémités au bras de soutien et par son autre extrémité à l'organe élastique de rappel, l'organe élastique de rappel étant constitué par un ressort fixe dont l'axe général est disposé de façon perpendiculaire à l'axe de support, les dispositifs de ce type sont en outre équipés d'un renvoi d'angle constitué par un galet sur lequel s'appuie la chaîne, de sorte que l'effort exercé par celle-ci sur le ressort soit parallèle à l'axe longitudinal du ressort quelle que soit la position du bras de soutien.

De par leur construction, les dispositifs des types ci-dessus n'autorisent pas un positionnement angulaire stable de la masse suspendue autour de son axe horizontal de support sur 360°.

L'invention vise à pallier ces inconvénients en proposant un dispositif de positionnement angulaire stable d'une masse par rapport à un axe horizontal de support permettant un déplacement angulaire régulier de la masse ainsi qu'un équilibrage de celle-ci quelle que soit sa position angulaire.

Elle a donc pour objet un dispositif de positionnement où l'axe de support est constitué par un arbre se prolongeant axialement par un maneton excentré sur lequel est articulé l'organe d'équilibrage.

L'invention peut en outre comporter une ou plusieurs des caractéristiques suivantes :
- l'organe élastique de rappel comporte un ressort dispose au moins en partie dans un boîtier monté oscillant sur ledit axe d'oscillation et muni d'un fond délimitant une surface d'appui pour une zone d'extrémité du ressort, dont la zone d'extrémité opposée coopère avec l'organe d'équilibrage du bras de soutien ;
- l'organe d'équilibrage comporte une tige rectiligne traversant un orifice ménagé dans le fond du boîtier et axialement déplaçable dans celui-ci sous la commande du bras de soutien ;
- l'ensemble constitué par l'organe d'équilibrage et l'organe élastique de rappel est disposé dans un carter, ledit axe d'oscillation étant constitué de deux ergots s'engageant dans deux paliers respectifs, ménagés les uns dans la paroi externe du boîtier et les autres dans la paroi interne du carter ;
- l'arbre se prolonge radialement en direction du maneton selon une direction sensiblement perpendiculaires ment au bras de soutien en vue d'exercer sur celui-ci, sous l'action de l'organe d'équilibrage, un moment d'équilibrage maximum lorsque le bras de soutien est dans une position horizontale et un moment d'équilibrage minimum lorsque le bras de soutien est dans une position verticale ;
- l'extrémité de l'arbre opposée au maneton est solidaire du bras de soutien ;
- le carter est intégré au bras de soutien, l'extrémité de l'arbre opposée au maneton étant solidaire d'un organe de soutien pour ledit bras ;
- le ressort est un ressort de compression à rondelles coniques de type "Belleville" ;
- le ressort est un ressort de compression à gomme visco-élastique ;
- l'ensemble constitué par l'organe d'équilibrage et l'organe élastique de rappel est en outre monté angulairement déplaçable autour d'un axe de pivotement perpendiculaire audit axe d'oscillation ;
- la masse est constituée par une coupole d'éclairage montée angulairement déplaçable sur le bras de soutien.

L'invention a également pour objet un appareil d'éclairage pour salle d'opération comprenant un bras de suspension d'une coupole d'éclairage à prismes articulé sur un plafonnier et sur lequel est montée angulairement déplaçable ladite coupole d'éclairage, caractérisé en ce qu'il comporte un dispositif de positionnement angulaire d'une masse telle que définie ci-dessus en vue du positionnement angulaire et de l'équilibrage de la coupole par rapport au bras de suspension.

D'autres caractéristiques et avantages de l'invention ressortiront de la description suivante, donnée à titre d'exemple et sans caractère limitatif, faite en référence aux dessins annexés sur lesquels :
- la figure 1 est une vue schématique d'un appareil d'éclairage pour salle d'opération, équipé d'un dispositif selon l'invention, dans différentes positions angulaires de la coupole d'éclairage ;
- la figure 2 est une vue de dessus agrandie d'un détail de l'appareil d'éclairage de la figure 1, avec coupes partielles, montrant le dispositif de positionnement angulaire de la coupole ;
- la figure 3 est une vue en coupe de profil, suivant la ligne III-III, du dispositif de la figure 2 ;
- la figure 4 représente l'appareil d'éclairage de la figure 1 ayant subi une rotation de 180° par rapport à son axe vertical de pivotement ; et
- la figure 5 illustre un autre mode de réalisation du dispositif de positionnement angulaire de la coupole d'éclairage.

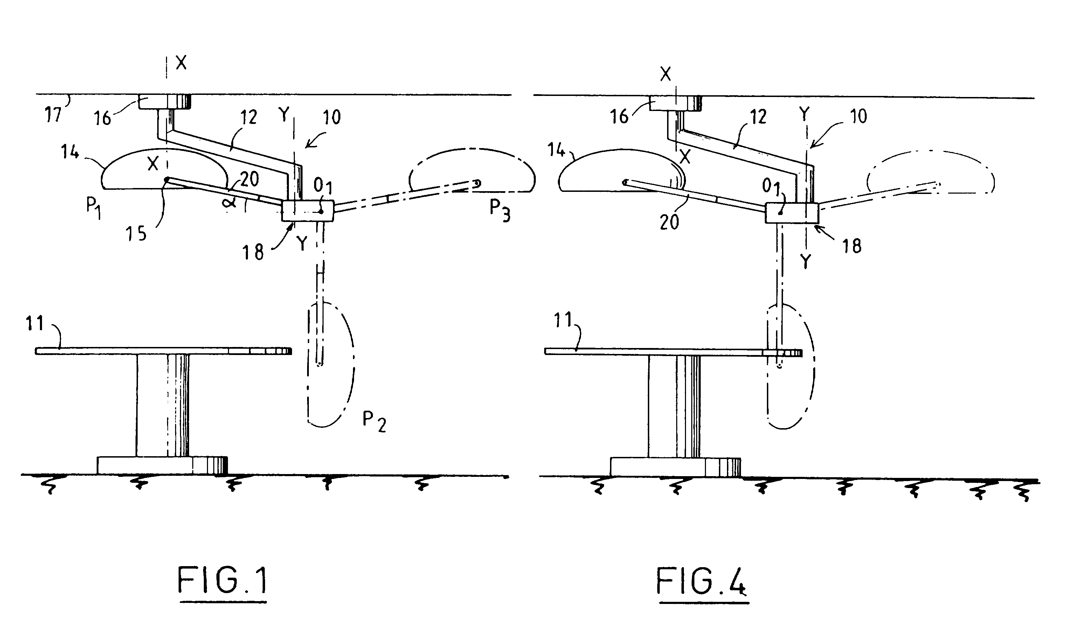

Sur la figure 1 on a représenté un appareil d'éclairage pour salle d'opération, désigné par la référence numérique 10, destiné à positionner précisément un volume de lumière sur un patient allongé sur une table d'opération 11.

L'appareil d'éclairage 10 comporte un bras de suspension 12, en forme de manivelle, d'une coupole d'éclairage 14, du type à prismes. Le bras 12 peut pivoter autour d'un axe principal X-X articulé sur un plafonnier 16, lui-même fixé sur le plafond 17 de la salle d'opération au moyen de tiges filetées.

La coupole d'éclairage 14 est reliée au bras de suspension 12 par un dispositif de positionnement angulaire de la coupole 14 par rapport à un axe horizontal de support O₁ perpendiculaire au plan de la figure 1.

Ce dispositif de positionnement angulaire, désigné par la référence numérique 18, permet à un chirurgien de positionner la coupole d'éclairage 14, dans les limites imposées par le plafond 17, en tout point d'un cercle d'axe O₁, et en particulier de déplacer la coupole d'éclairage 14 de sa position P1 représentée en trait plein sur la figure 1 vers les positions P2 et P3 représentées en pointillés, suivant le type d'opération chirurgicale devant être réalisée.

Le dispositif de positionnement angulaire 18 de la coupole 14 comporte un bras de soutien 20 monté angulairement déplaçable sur le bras de suspension 12, autour de l'axe O₁, et sur lequel la coupole d'éclairage 14 est articulée autour d'un axe horizontal 15 perpendiculaire au bras 20, et un organe d'équilibrage du bras 20, non visible sur cette figure 1.

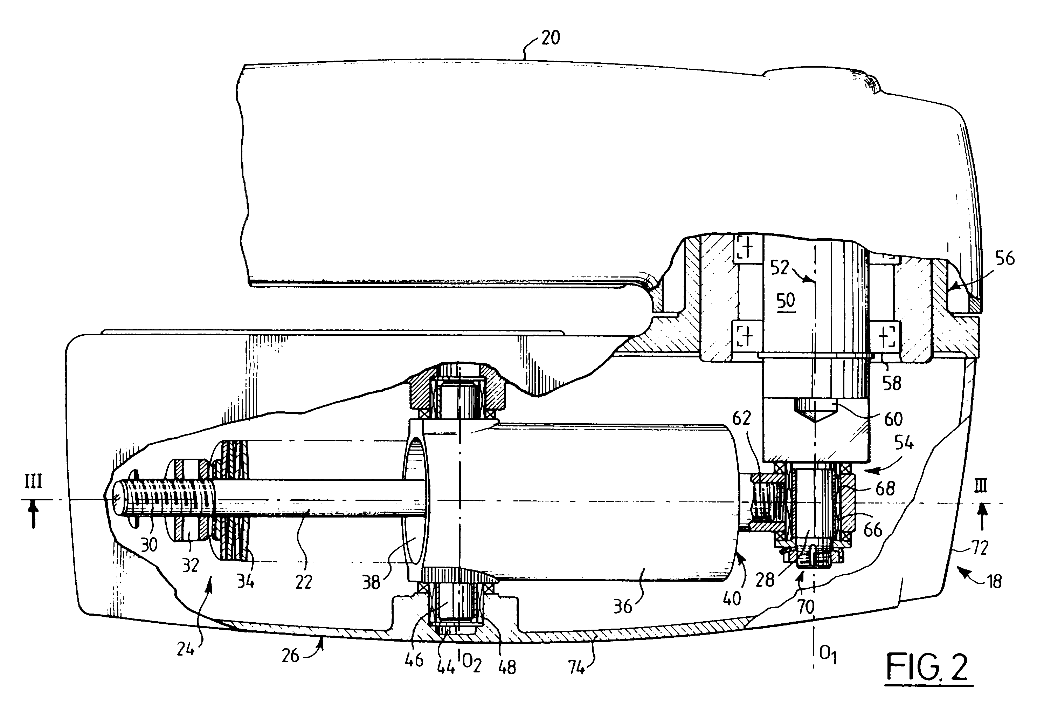

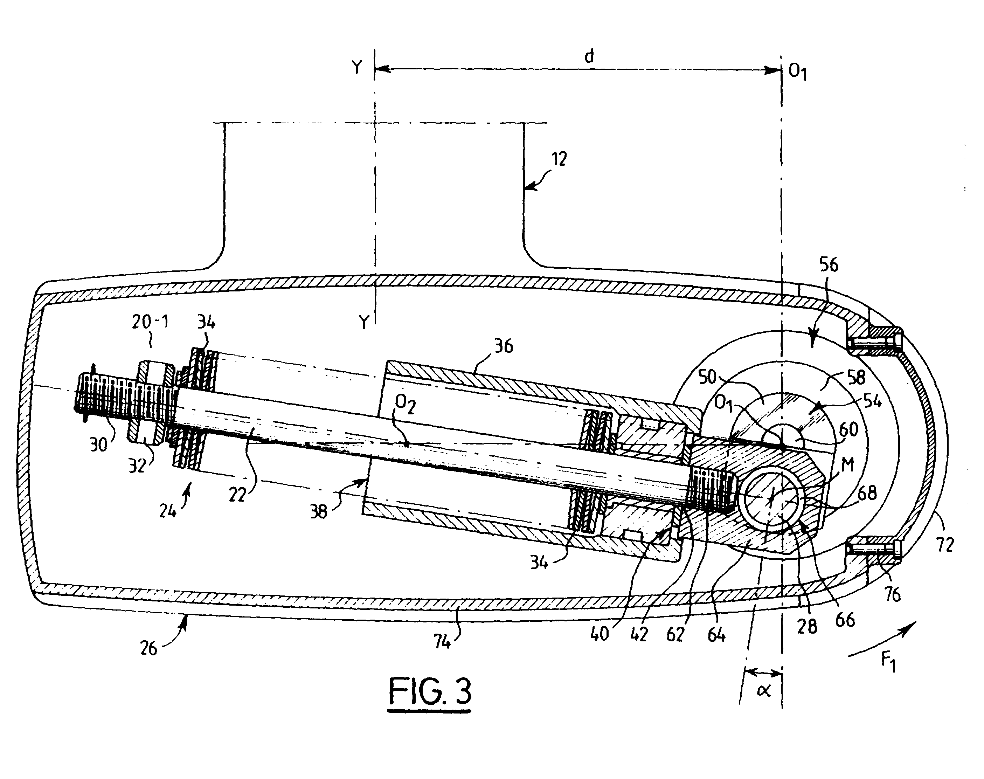

La description précise du dispositif de positionnement angulaire 18 de la coupole d'éclairage 14 va maintenant être faite en référence à la figure 2 et à la figure 3 sur laquelle le bras 20 a été schématisé par son axe 20-1 qui correspond à la position P1.

On voit sur ces figures, et en particulier sur la figure 2 sur laquelle le bras 20 a été fictivement tronqué, que le dispositif angulaire 18 de la coupole est constitué du bras 20, de l'organe d'équilibrage 22 et d'un organe élastique de rappel 24. L'organe d'équilibrage et l'organe élastique de rappel 24 sont disposés dans un carter 26, fixé sur le bras de suspension 12 et sur lequel est monté angulairement déplaçable le bras de soutien 20, par rapport à l'axe horizontal de soutien O₁.

L'organe d'équilibrage 22 est constitué par une tige rectiligne articulée, autour d'un axe d'articulation M, sur un maneton 28 s'étendant parallèlement à l'axe de support O₁ et radialement décalé par rapport à celui-ci, comme cela sera décrit plus en détail par la suite.

L'extrémité de la tige 22 opposée au maneton 28 comporte une zone filetée 30 sur laquelle est vissé un écrou 32 complémentaire constituant une tête sur laquelle s'appuie l'organe élastique de rappel 24.

On voit également sur ces figures que l'organe élastique de rappel 24 comporte un ressort 34 disposé au moins en partie dans un boîtier cylindrique 36 muni d'une tranche d'extrémité 38 ouverte et d'un fond 40 percé d'un orifice 42 pour le passage de la tige filetée 22. Le ressort est comprimé de façon réglable entre le fond 40 et l'écrou 32.

Dans l'exemple représenté, le ressort 34 est un ressort de compression à rondelles coniques de type "Belleville", mais d'autres types de ressorts peuvent également être utilisés, par exemple un ressort de compression à gomme visco-élastique.

Le boîtier 36 est monté oscillant dans le carter 26 sous la commande du maneton 28.

A cet effet, la paroi interne du carter 26 est munie de deux paliers coaxiaux 44, dans lesquels s'engagent deux ergots, tels que 46, en saillie radiale sur la paroi externe du boîtier 36, avec interposition de roulements à billes tels que 48, par exemple des roulements combinés palier-butée.

On va maintenant décrire la structure de la liaison entre le bras de soutien 20 et, d'une part, le carter 26 et, d'autre part, le maneton 28.

En vue de son déplacement angulaire par rapport à l'axe de support O₁, le bras 20 est solidaire d'une extrémité 52 d'un arbre 50 définissant l'axe de support O₁. Cet arbre 50 s'étend perpendiculairement au bras 20 en direction de l'organe d'équilibrage 22 et de l'organe élastique de rappel 24 et se prolonge axialement par son autre extrémité 54, perpendiculairement au bras 20, par le maneton excentré 28.

L'arbre 50 tourillonne dans un prolongement cylindrique 56 du carter 26 coaxial à cet arbre, au moyen d'un ensemble de roulements à billes 58.

Avantageusement, l'axe 50 est percé de conduits 60 pour le passage de conducteurs électriques d'alimentation de la coupole d'éclairage, non représentés et de type connu.

Comme mentionné précédemment, et comme représenté en détail sur la figure 3, l'arbre 50 se prolonge au niveau de son extrémité 54 par le maneton 28, sur lequel est articulée la tige rectiligne 22 et qui définit l'axe d'articulation M.

On conçoit donc que l'arbre 50 constitue une manivelle provoquant au cours de sa rotation le déplacement de la tige 22, angulaire et suivant son propre axe, dans le boîtier 36.

La liaison entre la tige rectiligne 22 et le maneton 28 est assurée de la façon suivante.

L'extrémité de la tige rectiligne 22 située au voisinage du maneton 28 comporte un filetage 62 pour le vissage d'un embout 64 généralement cylindrique et percé d'un orifice transversal 66 dans lequel est inséré le maneton 28.

En vue de la rotation de l'embout 64 par rapport au maneton 28, il est prévu un ensemble de roulements 68, constitués par exemple de roulements combinés palier-butée. La liaison entre l'embout 64 et le maneton 28 est complétée par des moyens de retenue axiale du maneton 28 dans l'embout 64, désignés par la référence 70 et de type connu (figure 2).

On voit sur la figure 3 que le carter 26 comporte un capot 72 fixé au corps 74 du carter 26 par des moyens de fixation 76 de vis.

On conçoit que l'ensemble qui vient d'être décrit, dans une position qui correspond à la position P1 de la figure 1, constitue un ensemble bielle-manivelle, la manivelle étant constituée par l'arbre 50 et son maneton 28, comme mentionné précédemment, et la bielle étant constituée par la tige rectiligne 22 équipée de son embout 64.

Dans cette position P1, le bras 20 forme un angle α par rapport à l'horizontale voisin de 10° (figure 1) et la droite joignant l'axe de support O₁ et l'axe d'articulation M (figure 3) forme également cet angle α par rapport à la verticale.

On conçoit que le poids de la coupole 14 fixée sur le bras de soutien 20 exerce un moment sur l'axe de soutien O₁, qui dépend de façon connue de l'angle que forme ce bras de soutien avec l'horizontale, c'est-à-dire avec la droite définie par l'axe horizontal de support O₁ et l'axe d'oscillation O₂ défini par les ergots 46 du boîtier 36 reçus dans les paliers 44.

Ce moment est maximal lorsque le bras 20 est dans l'une des positions horizontales et nul lorsque ce bras est situé dans une position verticale, c'est-à-dire perpendiculairement à la droite joignant les deux axes O₁ et O₂.

Par ailleurs, la tige 22, coopérant avec le ressort 34, exerce un moment antagoniste d'équilibrage s'opposant au moment engendré par la coupole 14. De façon connue, ce moment antagoniste est proportionnel au raccourcissement du ressort 34, c'est-à-dire fonction linéaire de la distance entre les axes O₂ et M (figure 3).

Du fait de la construction particulière de l'arbre 50, et en particulier de son prolongement excentré 28 au voisinage de l'extrémité 54 perpendiculairement au bras 20, ce moment d'équilibrage est maximal lorsque l'angle α de la figure 3 est nul, ce qui correspond à une position horizontale du bras de soutien 20.

En outre, ce moment est minimal lorsque la tige est située suivant la droite définie par les axes O₁ et O₂, c'est-à-dire lorsque le bras 20 est dans une position verticale (position P2).

Lorsque le bras de soutien 20 est déplacé de sa position P1 vers sa position P2, l'arbre 50 provoque la rotation du maneton 28 dans le sens désigné par la flèche F1 sur la figure 3 et le déplacement de la tige rectiligne 22 vers une position suivant la droite joignant les axes O₁ et O₂, c'est-à-dire horizontalement, ce qui provoque la compression du ressort 34.

Il est à noter que dans cette position P2 le ressort 34 se situe dans une position dans laquelle sa compression est la plus importante. Cependant, comme mentionné précédemment, le moment exercé par la tige 22 est nul. Elle n'exerce donc aucun effort sur le bras de soutien 20, qui est dans une position verticale stable.

Lorsque le bras de soutien 20 est déplacé de sa position P2 vers sa position P3, le maneton 28 est à nouveau déplacé dans le sens de rotation désigné par la flèche F1 et le dispositif se situe dans une position symétrique, par rapport à l'horizontale, de celle représentée sur la figure 3.

Lorsque le bras de soutien 20 est à nouveau déplacé, de la position P3, dans le sens de la flèche F1, vers une position instable verticale (non représentée), la tige rectiligne est à nouveau déplacée de manière à être positionnée horizontalement et le ressort se situe dans une position dans laquelle sa compression est minimale. Dans cette position, le moment nul exercé par la tige rectiligne 22 sur le bras de soutien 20 combiné au taux de compression minimum du ressort 34 permet de maintenir le bras 20 dans sa position verticale instable.

Au cours des différents déplacements mentionnés précédemment, la tige rectiligne 22 oscille par rapport à son axe d'oscillation O₂. Ainsi, l'ensemble constitué par la tige rectiligne 22 et l'organe élastique de rappel 24 s'oriente en permanence, quel que soit le déplacement angulaire du bras de soutien 20, suivant la droite définie par l'axe d'oscillation O₂ et l'axe d'articulation M de la tige rectiligne 22.

On conçoit donc qu'il est possible, en choisissant le ressort 34 en fonction des efforts à développer sur le bras de soutien 20, et en réglant sa compression en ajustant la position de l'écrou 32, d'équilibrer en permanence, c'est-à-dire quelle que soit la position angulaire de la coupole 14 autour de l'axe de support O₁, les moments antagonistes de manière à stabiliser la position du bras 20.

Le dispositif qui vient d'être décrit permet donc de positionner et de stabiliser en permanence le bras de soutien 20 sur 360° par rapport à l'axe de soutien O₁.

Toutefois, on voit sur la figure 1 que le débattement angulaire du bras 20 dans les positions les plus hautes est limité par la présence du plafond de la salle d'opération.

On peut cependant envisager de doter le dispositif d'un bras de soutien de longueur plus faible pour éviter cette limitation, mais ceci s'accompagne d'une limitation du débattement latéral.

Dans l'exemple qui vient d'être décrit, le débattement latéral de la coupole d'éclairage 14 a été préféré au débattement vers le haut, afin de pouvoir couvrir une surface d'éclairage plus importante.

Afin d'améliorer encore ce débattement latéral, le carter 26 est articulé autour du second axe de pivotement vertical Y-Y (figure 3) du bras de suspension 12, cet axe Y-Y étant décalé d'une distance d de l'axe de soutien O₁.

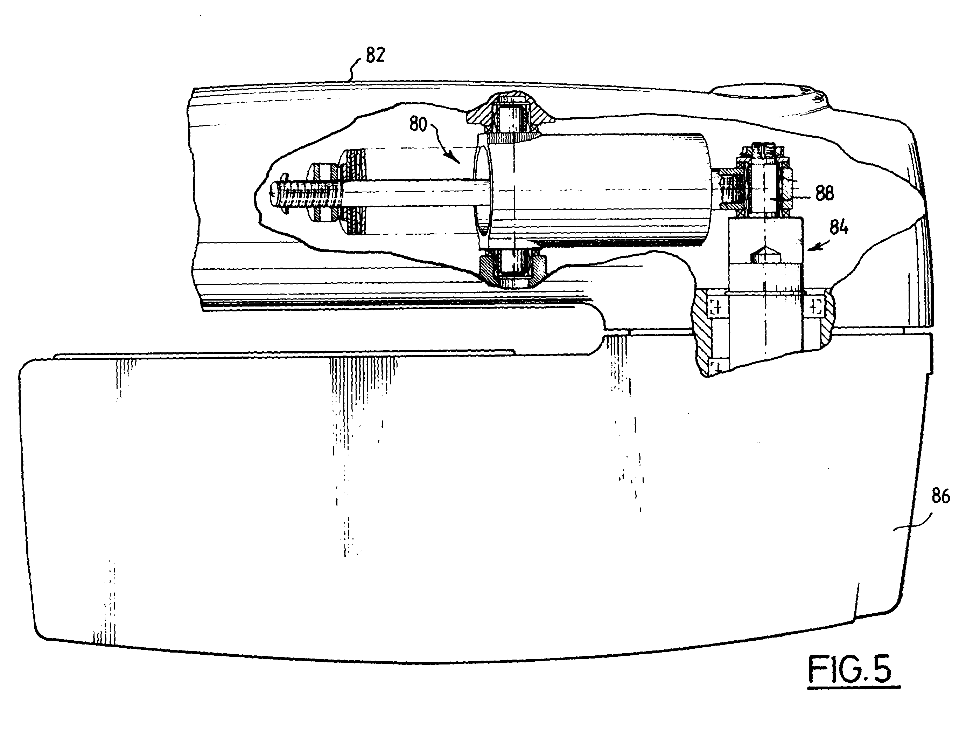

Il est ainsi possible d'obtenir une translation d'une distance égale à 2 x d au moyen d'une rotation de 180° du châssis 26 par rapport au bras de suspension 12, comme représenté sur la figure 4.

On conçoit ainsi que les déplacements angulaires du bras de suspension 12 par rapport au plafonnier 16, du bras de soutien 20 par rapport d'une part à l'axe de support horizontal O₁ et d'autre part à l'axe vertical de pivotement Y-Y, permettent de déplacer le volume de lumière engendré par la coupole d'éclairage 14 dans un espace relativement important, pour chaque position angulaire donnée du bras de suspension 12.

En outre, le déplacement de la coupole entre deux positions quelconques s'effectue de façon régulière et précise, puisque tous les mouvements sont guidés directement par des roulements interposés entre les organes constituant le dispositif de positionnement 18.

Dans le mode de réalisation qui vient d'être décrit en référence aux figures 2 et 3, l'ensemble constitué par l'organe d'équilibrage et l'organe élastique de rappel est monté oscillant dans le carter sur lequel est articulé le bras de soutien.

Selon un autre exemple de réalisation, représenté sur la figure 5, l'organe d'équilibrage et l'organe élastique de rappel, de construction similaire à ceux décrits précédemment et désignés par la référence numérique 80, sont montés oscillants dans le bras de soutien 82.

Le bras de soutien 82 est monté angulairement déplaçable autour d'un arbre 84 solidaire par une de ses extrémités d'un organe de soutien 86 pour le bras, relié au bras de suspension de l'appareil d'éclairage.

Le bras de soutien 82 est angulairement déplaçable par rapport à l'organe de soutien 86 et, comme précédemment, l'extrémité de l'arbre 84, opposée à l'organe de soutien 86, se prolonge axialement par un maneton excentré 88 sur lequel s'articule l'organe d'équilibrage 80.

Ce mode de réalisation, qui ne diffère du mode de réalisation des figures 2 et 3 que par le positionnement des organes d'équilibrage et élastique de rappel, fonctionne de manière similaire et permet également le déplacement régulier et l'équilibrage de la coupole quelle que soit sa position angulaire.

## Revendications

1. Dispositif de positionnement angulaire d'une masse (14) par rapport à un axe horizontal de support (O₁), comprenant un bras de soutien (20;82) destiné à porter ladite masse (14) et monté angulairement déplaçable autour dudit axe de support (O₁), et un organe d'équilibrage (22;80) dudit bras (20;82) relié à celui-ci et coopérant avec un organe élastique de rappel (24) adapté pour appliquer sur un point (M) solidaire du bras de soutien une force, de façon à générer un moment d'équilibrage de la masse autour de l'axe de support (O₁) s'opposant au moment engendré par le poids de celle-ci, l'ensemble constitué par l'organe d'équilibrage (22;80) et l'organe élastique de rappel (24) étant monté oscillant sur un axe d'oscillation (O₂) parallèle à l'axe de support (O₁) et situé à une distance fixe de celui-ci, de façon à s'orienter en permanence vers ledit point (M) lors des déplacements angulaires du bras de soutien (20;82), caractérisé en ce que l'axe de support (O₁) est constitué par un arbre (50;84) se prolongeant axialement par un maneton (28;88) excentré sur lequel est articulé l'organe d'équilibrage (22;80).

2. Dispositif de positionnement selon la revendication 1, caractérisé en ce que l'organe élastique de rappel (24) comporte un ressort (34) disposé au moins en partie dans un boîtier (36) monté oscillant sur ledit axe d'oscillation (O₂) et muni d'un fond (40) délimitant une surface d'appui pour une zone d'extrémité du ressort (34), dont la zone d'extrémité opposée coopère avec l'organe d'équilibrage (22) du aras de soutien (20).

3. Dispositif de positionnement selon la revendication 2, caractérisé en ce que l'organe d'équilibrage (22;80) comporte une tige rectiligne (22) traversant un orifice ménagé dans le fond du boîtier et axialement déplaçable dans celui-ci sous la commande du bras de soutien (20;82).

4. Dispositif de positionnement selon l'une des revendications 2 et 3, caractérisé en ce que l'ensemble constitué par l'organe d'équilibrage et l'organe élastique de rappel est disposé dans un carter (26), ledit axe d'oscillation (O₂) étant constitué de deux ergots s'engageant dans deux paliers respectifs, ménagés les uns dans la paroi externe du boîtier (36) et les autres dans la paroi interne du carter (26).

5. Dispositif de positionnement selon l'une des revendications 1 à 4, caractérisé en ce que l'arbre (50;84) se prolonge radialement en direction du maneton (28;88) selon une direction sensiblement perpendiculaire au bras de soutien (20;82) en vue d'exercer sur celui-ci, sous l'action de l'organe d'équilibrage (22;80), un moment d'équilibrage maximum lorsque le bras de soutien (20;82) est dans une position horizontale et un moment d'équilibrage minimum lorsque le bras de soutien (20;82) est dans une position verticale.

6. Dispositif de positionnement selon l'une des revendications précédentes, caractérisé en ce que l'extrémité de l'arbre (50) opposée au maneton (28) est solidaire du bras de soutien (20).

7. Dispositif de positionnement selon l'une des revendications 4 et 5, caractérisé en ce que le carter est intégré au bras de soutien (82), l'extrémité de l'arbre (84) opposée au maneton (88) étant solidaire d'un organe de soutien pour ledit bras (82).

8. Dispositif de positionnement selon l'une quelconque des revendications 2 à 7, caractérisé en ce que le ressort (34) est un ressort de compression à rondelles coniques de type "Belleville".

9. Dispositif de positionnement selon l'une quelconque des revendications 2 à 7, caractérisé en ce que le ressort (34) est un ressort de compression à gomme visco-élastique.

10. Dispositif de positionnement selon l'une quelconque des revendications précédentes, caractérisé en ce que l'ensemble constitué par l'organe d'équilibrage (22) et l'organe élastique de rappel (24) est en outre monté angulairement déplaçable autour d'un axe de pivotement (Y-Y) perpendiculaire audit axe d'oscillation (O₂).

11. Dispositif de positionnement selon l'une quelconque des revendications précédentes, caractérisé en ce que la masse est constituée par une coupole d'éclairage (14) montée angulairement déplaçable sur le bras de soutien (20).

12. Appareil d'éclairage pour salle d'opération comprenant un bras de suspension (12) d'une coupole d'éclairage à prismes (14) articulé sur un plafonnier (16) et sur lequel est montée angulairement déplaçable ladite coupole d'éclairage (14), caractérisé en ce qu'il comporte un dispositif de positionnement angulaire d'une masse selon l'une quelconque des revendications 1 à 11 en vue du positionnement angulaire et de l'équilibrage de la coupole (14) par rapport au bras de suspension (12).

## Patentansprüche

1. Winkelpositionierungsvorrichtung für eine Masse (14) bezüglich einer horizontalen Stützachse (O₁), mit einem Stützarm (20; 82), der die Masse (14) tragen soll und um die Stützachse (O₁) herum winkelförmig verschiebbar angeordnet ist, und einem Ausgleichsglied (22; 80) des Arms (20; 82), das mit diesem verbunden ist und mit einem elastischen Rückholglied (24) zusammenwirkt, welches so ausgebildet ist, daß es auf einen fest mit dem Stützarm verbundenen Punkt (M) eine Kraft ausübt, um ein Ausgleichsmoment für die Masse um die Stützachse (O₁) herum zu erzeugen, das dem durch ihr Gewicht erzeugten Moment entgegenwirkt, wobei die aus dem Ausgleichsglied (22; 80) und dem elastischen Rückholglied (24) bestehende Anordnung an einer parallel zur Stützachse (O₁) verlaufenden und sich in einem festen Abstand davon befindenden Schwingungsachse (O₂) schwenkend derart angebracht ist, daß sie bei winkelförmigen Verschiebungen des Stützarms (20; 82) dauerhaft auf den Punkt (M) ausgerichtet ist, dadurch gekennzeichnet, daß die Stützachse (O₁) aus einer Welle (50; 84) besteht, die in Axialrichtung durch einen exzentrischen Kurbelzapfen (28; 88) verlängert ist, an dem das Ausgleichsglied (22; 80) angelenkt ist.

2. Positionierungsvorrichtung nach Anspruch 1, dadurch gekennzeichnet, daß das elastische Rückholglied (24) eine Feder (34) umfaßt, die zumindest zum Teil in einem Gehäuse (36) angeordnet ist, das an der Schwingungsachse (O₂) schwenkend angebracht ist und mit einem Boden (40) versehen ist, der eine Stützfläche für einen Endbereich der Feder (34) begrenzt, deren gegenüberliegender Endbereich mit dem Ausgleichsglied (22) des Stützarms (20) zusammenwirkt.

3. Positionierungsvorrichtung nach Anspruch 2, dadurch gekennzeichnet, daß das Ausgleichsglied (22; 80) eine gerade Stange (22) umfaßt, die eine im Boden des Gehäuses ausgebildete Öffnung durchquert und darin unter Steuerung des Stützarms (20; 82) axial verschiebbar ist.

4. Positionierungsvorrichtung nach Anspruch 2 oder 3, dadurch gekennzeichnet, daß die aus dem Ausgleichsglied und dem elastischen Rückholglied bestehende Anordnung in einem Kasten (26) angeordnet ist, wobei die Schwingungsachse (O₂) aus zwei Zapfen besteht, die in zwei jeweilige Lager eingreifen, von denen die einen in der Außenwand des Gehäuses (36) und die anderen in der Innenwand des Kastens (26) ausgebildet sind.

5. Positionierungsvorrichtung nach einem der Ansprüche 1 bis 4, dadurch gekennzeichnet, daß die Welle (50; 84) in Richtung des Kurbelzapfens (28; 88) in einer im wesentlichen senkrecht zum Stützarm (20; 82) verlaufenden Richtung radial verlängert ist, um auf diesen unter der Wirkung des Ausgleichsglieds (22; 80) ein maximales Ausgleichsmoment auszuüben, wenn sich der Stützarm (20; 82) in einer horizontalen Position befindet, und ein minimales Ausgleichsmoment, wenn sich der Stützarm (20; 82) in einer vertikalen Position befindet.

6. Positionierungsvorrichtung nach einem der vorhergehenden Ansprüche, dadurch gekennzeichnet, daß das dem Kurbelzapfen (28) gegenüberliegende Ende der Welle (50) mit dem Stützarm (20) fest verbunden ist.

7. Positionierungsvorrichtung nach Anspruch 4 oder 5, dadurch gekennzeichnet, daß der Kasten in dem Stützarm (82) integriert ist, wobei das dem Kurbelzapfen (88) gegenüberliegende Ende der Welle (84) mit einem Stützglied für den Arm (82) fest verbunden ist.

8. Positionierungsvorrichtung nach einem der Ansprüche 2 bis 7, dadurch gekennzeichnet, daß es sich bei der Feder (34) um eine Teller-Druckfeder handelt.

9. Positionierungsvorrichtung nach einem der Ansprüche 2 bis 7, dadurch gekennzeichnet, daß es sich bei der Feder (34) um eine Druckfeder aus viskoelastischem Gummi handelt.

10. Positionierungsvorrichtung nach einem der vorhergehenden Ansprüche, dadurch gekennzeichnet, daß die aus dem Ausgleichsglied (22) und dem elastischen Rückholglied (24) bestehende Anordnung des weiteren um eine senkrecht zur Schwingungsachse (O₂) verlaufende Schwenkachse (Y-Y) winkelförmig verschiebbar angebracht ist.

11. Positionierungsvorrichtung nach einem der vorhergehenden Ansprüche, dadurch gekennzeichnet, daß die Masse aus einer Lampenkuppel (14) besteht, die um den Stützarm (20) winkelförmig verschiebbar angebracht ist.

12. Beleuchtungseinrichtung für einen Operationssaal, mit einem an einem Deckenhalter (16) angebrachten Aufhängungsarm (12) für eine Prismenlampenkuppel (14), an dem die Lampenkuppel (14) winkelförmig verschiebbar angebracht ist, dadurch gekennzeichnet, daß sie eine Vorrichtung zur Winkelpositionierung einer Masse nach einem der Ansprüche 1 bis 11 zur Winkelpositionierung und zum Ausgleich der Kuppel (14) bezüglich des Aufhängungsarms (12) aufweist.

## Claims

1. Device for angularly positioning a mass (14) relative to a horizontal support axis (O₁), comprising a support arm (20; 82) intended to carry said mass (14) and mounted angularly displaceably about said support axis (O₁), and a balancing member (22; 80) for said arm (20; 82) connected to the latter and interacting with a resilient return member (24) adapted to apply a force to a point (M) integral with the support arm so as to generate a balancing moment for the mass about the support axis (O₁) opposing to the moment generated by the weight of this mass, the assembly constituted by the balancing member (22; 80) and the resilient return member (24) being mounted so as to oscillate on an oscillation axis (O₂) parallel to the support axis (O₁) and located at a fixed distance from the latter, so as to be permanently oriented towards said point (M) during angular displacements of the support arm (20; 82), characterized in that the support axis (O₁) is constituted by a shaft (50; 84) prolonged axially by an eccentric crank pin (28; 88) on which is articulated the balancing member (22; 80).

2. Positioning device according to Claim 1, characterized in that the resilient return member (24) comprises a spring (34) arranged at least in part in a housing (36) mounted so as to oscillate on said oscillation axis (O₂) and provided with a bottom (40) delimiting a bearing surface for an end region of the spring (34), whose opposite end region interacts with the balancing member (22) of the support arm (20).

3. Positioning device according to Claim 2, characterized in that the balancing member (22; 80) comprises a rectilinear rod (22) which passes through an opening provided in the bottom of the housing and is axially displaceable in the latter under the control of the support arm (20; 82).

4. Positioning device according to either of Claims 2 and 3, characterized in that the assembly constituted by the balancing member and the resilient return member is arranged in a frame (26), said oscillation axis (O₂) being constituted by two lugs engaging in two respective bearings, one pair being provided in the external wall of the housing (36) and the other in the internal wall of the frame (26).

5. Positioning device according to one of Claims 1 to 4, characterized in that the shaft (50; 84) is prolonged radially in the direction of the crank pin (28; 88) in a direction substantially perpendicular to the support arm (20; 82) so as to exert on the latter, under the action of the balancing member (20; 82), a maximum balancing moment when the support arm (20; 82) is in a horizontal position and a minimum balancing moment when the support arm (20; 82 is in a vertical position.

6. Positioning device according to one of the preceding claims, characterized in that the end of the shaft (50) opposite the crank pin (28) is secured to the support arm (20).

7. Positioning device according to either of Claims 4 and 5, characterized in that the frame is integrated with the support arm (82), the end of the shaft (84) opposite the crank pin (88) being secured to a support member for said arm (82).

8. Positioning device according to any one of Claims 2 to 7, characterized in that the spring (34) is a compression spring with conical washers of the Belleville type.

9. Positioning device according to any one of Claims 2 to 7, characterized in that the spring (34) is a visco-elastic elastomer compression spring.

10. Positioning device according to any one of the preceding claims, characterized in that the assembly constituted by the balancing member (22) and the resilient return member (24) is moreover mounted angularly displaceably about a pivot axis (Y-Y) perpendicular to said oscillation axis (O₂).

11. Positioning device according to any one of the preceding claims, characterized in that the mass is constituted by a domed light fitting (14) mounted angularly displaceably on the support arm (20).

12. Lighting apparatus for an operating theatre comprising a suspension arm (12) for a domed prism light fitting (14) articulated on a ceiling fixture (16) and on which said light (14) is mounted angularly displaceably, characterized in that it comprises an angular positioning device for a mass according to any one of Claims 1 to 11 for the angular positioning and balancing of the light (14) relative to the suspension arm (12).
